# EUROPEAN PATENT APPLICATION

(11) **EP 4 503 236 A1**
(43) Date of publication of application: **05.02.2025**
(21) Application number: 23907803.3
(22) Date of filing: 21.12.2023
(51) Int. Cl.: H01M 10/0585, H01M 10/42, H01M 10/0569, H01M 10/0568, H01M 10/052, H01M 4/13, H01M 4/62, H01M 50/46, H01M 10/0562

(54) **ELECTRODE ASSEMBLY AND LITHIUM SECONDARY BATTERY COMPRISING SAME**

(30) Priority: 21.12.2022 KR 20220181062; 03.05.2023 KR 20230057709; 20.12.2023 KR 20230187354
(71) Applicant: LG Energy Solution, Ltd., Seoul 07335 (KR)
(72) Inventor: KIM, Hyosik, Daejeon 34122 (KR); SOON, Jiyong, Daejeon 34122 (KR); KIM, Jinhyuk, Daejeon 34122 (KR); PARK, Gaeun, Daejeon 34122 (KR); KANG, Sungjoong, Daejeon 34122 (KR)
(74) Representative: Goddar, Heinz J.
(86) International application number: PCT/KR2023/021248
(87) International publication number: WO 2024/136520

(57) **Abstract**

The present disclosure relates to an electrode assembly comprising:
a positive electrode, a negative electrode, and a coating layer located between the positive electrode and the negative electrode,
wherein the coating is formed in two or more layers in the stacking direction of the positive electrode and the negative electrode,
wherein the coating layer includes a first coating layer that comes into an opposing contact with the negative electrode and a second coating layer that does not come into an opposing contact with the negative electrode, the first coating layer includes any one particle selected from i) to iii) below, the second coating layer includes iii) when i) or ii) is included in the first coating layer, and includes either i) or ii) when iii) is included in the first coating layer:
i) oxide-based solid electrolyte particles and ceramic particles having an absolute value of zeta potential of 25 mV or more,
ii) oxide-based solid electrolyte particles, and
iii) ceramic particles with an absolute value of zeta potential of 25 mV or more.

## Description

### [TITLE OF INVENTION]

### ELECTRODE ASSEMBLY, AND LITHIUM SECONDARY BATTERY COMPRISIING THE SAME

### [TECHNICAL FIELD]

### Cross Citation with Related Application(s)

This application claims the benefit of Korean Patent Application No. 10-2023-0057709 filed on May 3, 2023 and Korean Patent Application No. 10-2022-0181062 filed on December 21, 2022 in the Korean Intellectual Property Office, the disclosures of which are incorporated herein by reference in their entirety.

The present disclosure relates to an electrode assembly, and a lithium secondary battery comprising the same.

### [BACKGROUND]

Recently, demand for high-capacity, high-output, long-life and high-stability lithium secondary batteries has been increased as an application area of lithium secondary batteries has rapidly expanded to power storage supply of large-area devices, such as automobiles and power storage devices, as well as electricity, electronics, communication, and power supply of electronic devices such as computers.

Generally, a lithium secondary battery includes a positive electrode, a negative electrode, a separator interposed between the positive electrode and the negative electrode, an organic solvent, and the like. Since the positive electrode can generate oxygen due to its unstable structure in a charged state, and there is a high danger of ignition when oxygen is generated, attempts has been made to research and develop a method capable of enhancing the safety of lithium secondary batteries.

A separator is used to ensure electrical insulation between a positive electrode and a negative electrode, and a thin film made of polyolefin is generally used. However, a polyolefin-based separator can easily shrink in high temperature environments and thus fail to insulate between a positive electrode and a negative electrode. When electrical insulation between the positive electrode and the negative electrode becomes impossible, a short circuit may occur, which may interact with oxygen generated by the unstable positive electrode to cause ignition. In other words, when a short circuit occurs in a charged lithium secondary battery in a high-temperature environment, there may be a problem that an ignition of the lithium secondary battery occurs.

In addition, it is known that the electrolyte of a lithium secondary battery includes a highly volatile and flammable solvent, but there is a problem that ignition occurs easily.

In order to solve this problem, an all-solid-state battery using a flame retardant electrolyte containing a flame retardant solvent may be a solution, but there is a problem that such a flame retardant electrolyte is not well impregnated into a conventional separator, and cell performance is inferior by low ionic conductivity and high interfacial resistance between electrolyte particles. Further, if the electrolyte is not well impregnated into the lithium secondary battery, there is a problem that a non-uniform reaction occurs between the electrode and the electrolyte, thereby generating dendrites and causing a short circuit.

Therefore, in order to solve these problems, attempts have been made to research and develop a method capable of maintaining and enhancing various performances while increasing the stability of the lithium secondary battery.

### [DETAILED DESCRIPTION OF THE INVENTION]

### [Technical Problem]

Therefore, the present disclosure has been designed to solve the above-mentioned problems, and an object of the present disclosure is to provide an electrode assembly that not only has excellent high-temperature safety and thus prevents ignition, but also has high electrolyte impregnation property and thus is excellent in battery performance, and a lithium secondary battery comprising the same.

### [Technical Solution]

According to one embodiment of the present disclosure, there is provided an electrode assembly comprising:
a positive electrode, a negative electrode, and a coating layer located between the positive electrode and the negative electrode,
wherein the coating is formed in two or more layers in the stacking direction of the positive electrode and the negative electrode,
wherein the coating layer includes a first coating layer that comes into an opposing contact with the negative electrode and a second coating layer that does not come into an opposing contact with the negative electrode, the first coating layer includes any one particle selected from i) to iii) below, the second coating layer includes iii) when i) or ii) is included in the first coating layer, and includes either i) or ii) when iii) is included in the first coating layer:
   i) oxide-based solid electrolyte particles and ceramic particles having an absolute value of zeta potential of 25 mV or more,
   ii) oxide-based solid electrolyte particles, and
   iii) ceramic particles with an absolute value of zeta potential of 25 mV or more.

Wherein, the oxide-based solid electrolyte particles may include one or more lithium metal oxide or lithium metal phosphate selected from Nasicon-type solid electrolyte, Lisicon-type solid electrolyte, Garnet-type solid electrolyte, Perovskite-type solid electrolyte, and LiPON-type solid electrolyte. Specifically, the oxide-based solid electrolyte particles may include one or more selected from the group consisting of LAGP(lithium aluminum germanium phosphate)-based compound, LLZO(lithium lanthanum zirconium oxide)-based compound, LATP(lithium aluminum titanium phosphate)-based compound, LLZTO(lithium lanthanum zirconium tantalum oxide)-based compound, LLTO(lithium lanthanum titanium oxide)-based compound, LSTP(lithium silicon titanium phosphate)-based compound, and LGPO(lithium germanium phosphate)-based compound.

Further, the ceramic particles may include one or more selected from the group consisting of BN(boron nitride), boehmite, Al₂O₃, TiO₂, Fe₂O₃, SiO₂, ZrO₂, Co₃O₄, SnO₂, NiO, ZnO, V₂O₅, LiF and MnO. Specifically, the ceramic particles may include one or more selected from the group consisting of BN(boron nitride), boehmite, Al₂O₃, and LiF.

The second coating layer may come into an opposing contact with the positive electrode.

Wherein, the first coating layer may include iii), and the second coating layer may include either i) or ii).

On the other hand, one or more of the first coating layer and the second coating layer may further comprise polymer particles having an absolute value of zeta potential of 25 mV or more, wherein the polymer particles may include one or more selected from the group consisting of polyethylene oxide(PEO), polyphenylene sulfide(PPS), polymethyl(meth)acrylate(PMMA), polystyrene, polyvinyl chloride, polycarbonate, polysulfone, polyethersulfone, polyetherimide, polyphenylsulfone, polyamideimide, polyimide, polybenzimidazole, polyether ketone, polyphthalamide, polybutylene terephthalate, and polyethylene terephthalate.

Further, the electrode assembly further comprises a separator, and the second coating layer may come into an opposing contact with the positive electrode, the separator, or the positive electrode and the separator. At this time, the first coating layer may include iii), and the second coating layer may include either i) or ii).

Further, in this case, one or more of the first coating layer and the second coating layer may further comprise polymer particles having an absolute value of zeta potential of 25 mV or more, wherein the polymer particles may include one or more selected from the group consisting of polyethylene oxide(PEO), polyphenylene sulfide(PPS), polymethyl(meth)acrylate(PMMA), polystyrene, polyvinyl chloride, polycarbonate, polysulfone, polyethersulfone, polyetherimide, polyphenylsulfone, polyamideimide, polyimide, polybenzimidazole, polyether ketone, polyphthalamide, polybutylene terephthalate, and polyethylene terephthalate.

On the other hand, the coating layer may further include one or more additive selected from the group consisting of a binder and a dispersant, respectively.

The coating layers may have a thickness of 1 micrometer to 30 micrometers, respectively.

According to another embodiment of the present disclosure, there is provided a lithium secondary battery comprising the electrode assembly, an electrolyte, and a battery case.

At this time, the electrolyte may be a flame retardant electrolyte that includes a flame retardant solvent having a flash point of 100°C or more or having no flash point and a lithium salt.

The flame retardant solvent may include one or more compound selected from a sulfone-based compound, a nitrile-based compound, a phosphoric acid-based compound, and a fluorine-substituted carbonate-based compound, and the lithium salt may include, for example, LiN(SO₂CF₃)₂.

### [BRIEF DESCRIPTION OF THE DRAWINGS]

FIG. 1 schematically shows an electrode assembly according to an embodiment of the present disclosure.
FIG. 2 schematically shows an electrode assembly according to another embodiment of the present disclosure.
FIG. 3 schematically shows an electrode assembly according to another embodiment of the present disclosure.
FIG. 4 schematically shows an electrode assembly according to another embodiment of the present disclosure.
FIG. 5 schematically shows an electrode assembly according to another embodiment of the present disclosure.
FIG. 6 schematically shows an electrode assembly according to another embodiment of the present disclosure.
FIG. 7 schematically shows an electrode assembly according to another embodiment of the present disclosure.

### [DETAILED DESCRIPTION OF THE EMBODIMENTS]

Hereinafter, terms or words used in the present specification and claims should not be construed as limited to ordinary or dictionary terms, and the present invention should be construed with meanings and concepts that are consistent with the technical idea of the present invention based on the principle that the inventors can appropriately define concepts of the terms to appropriately describe their own invention in the best way.

Unless defined otherwise, all terms (including technical and scientific terms) used in the present specification may be used as meanings that can be commonly understood by those of ordinary skill in the art to which the present invention belongs. In addition, terms defined in a commonly used dictionary are not interpreted ideally or excessively unless specifically explicitly defined.

The terms used herein are provided to describe the embodiments but not to limit the inventive concept. In the specification, the singular forms include plural forms unless the context clearly indicates otherwise. The terms "comprises" and/or "comprising" used herein does not exclude the existence or the addition of one or more elements other than those mentioned.

Throughout the specification, unless explicitly described to the contrary, the word "comprise" and variations such as "comprises" or "comprising" will be understood to imply the inclusion of stated elements but not the exclusion of any other elements.

As used herein, the " ζ potential (zeta potential)" is the index indicating the degree of surface charge amount of the particles. The zeta potential of particles in the present invention can be measured, for example, by an electrophoretic light scattering method using a dynamic light scattering device. Specifically, the zeta potential value of the polymer particles or ceramic particles included in the coating layer in the present disclosure can be measured by an electrophoretic light scattering method using a dynamic light scattering equipment. As an example, the zeta potential value can be measured after dispersing polymer particles or ceramic particles in a solvent such as water or alcohol without a dispersant.

Hereinafter, the embodiments described herein and the configurations shown in the drawings are only most preferable embodiments of the present disclosure and do not represent the entire spirit of the present disclosure, so it should be appreciated that there may be various equivalents and modifications that can replace the embodiments and the configurations at the time of filing the present application.

According to embodiments of the present disclosure, there is provided an electrode assembly comprising:
a positive electrode, a negative electrode, and a coating layer located between the positive electrode and the negative electrode,
wherein the coating is formed in two or more layers in the stacking direction of the positive electrode and the negative electrode,
wherein the coating layer includes a first coating layer that comes into an opposing contact with the negative electrode and a second coating layer that does not come into an opposing contact with the negative electrode, the first coating layer includes any one particle selected from i) to iii) below, the second coating layer includes iii) when i) or ii) is included in the first coating layer, and includes either i) or ii) when iii) is included in the first coating layer:
   i) oxide-based solid electrolyte particles and ceramic particles having an absolute value of zeta potential of 25 mV or more,
   ii) oxide-based solid electrolyte particles, and
   iii) ceramic particles with an absolute value of zeta potential of 25 mV or more.

### <Coating Layer>

As the oxide-based solid electrolyte particles, any solid electrolyte having a lithium ion source containing lithium in its structure, and having the form of lithium metal oxide or lithium metal phosphate can be used.

Specific examples thereof include one or more lithium metal oxide or lithium metal phosphate selected from Nasicon-type solid electrolyte, Lisicon-type solid electrolyte, Garnet-type solid electrolyte, Perovskite-type solid electrolyte, and LiPON-type solid electrolyte. More specific examples thereof include one or more selected from the group consisting of LAGP (lithium aluminum germanium phosphate)-based compound, LLZO (lithium lanthanum zirconium oxide)-based compound, LATP (lithium aluminum titanium phosphate)-based compound, LLZTO (lithium lanthanum zirconium tantalum oxide)-based compound, LLTO (lithium lanthanum titanium oxide)-based compound, LSTP (lithium silicon titanium phosphate)-based compound, and LGPO (lithium germanium phosphate)-based compound.

Among these, from the viewpoint of accelerating the desolvation of lithium ions at the interface between the active material layer and the coating layer and improving the ionic conductivity and output of the lithium secondary battery, a Nasicon-type solid electrolyte or a Garnet-type solid electrolyte may be preferably used. More specifically, a Nasicon-type solid electrolyte such as the LAGP-based compound or the LATP-based compound may be appropriately used.

When the oxide-based solid electrolyte particles are included in the coating layer, resistance can be reduced due to the affinity of the oxide-based solid electrolyte particles themselves with the electrolyte, which is thus preferable.

The average diameter(D50) of the oxide-based solid electrolyte particles may be 50 nanometers to 10 micrometers, specifically 50 nanometers to 5 micrometers, more specifically, 50 nanometers to 1 micrometer.

If the average diameter is outside the above range and is too small, aggregation between particles may occur due to a decrease in the dispersibility. Conversely, if the average diameter is too large, the pores of the coating layer may be formed too large and lithium dendrites may be easily formed through the pores, which is thus not preferable.

When the average diameter satisfies the above range, the lithium ion conductivity in the coating layer can be increased to thereby reduce resistance and exhibiting improved secondary battery performance.

The absolute value of the zeta potential of the ceramic particles may be 25 mV or more, specifically 35 mV or more, and more specifically 45 mV or more. When the absolute value of the zeta potential satisfies the above range, the flame retardant electrolyte can be easily impregnated into the coating layer even when applying a flame retardant electrolyte to a lithium secondary battery containing the electrode according to the present disclosure, so that a uniform reaction can occur throughout the electrode, and thus, performances such as capacity, output, and life characteristics of the lithium secondary battery can be improved.

Specific examples of the ceramic particles include one or more selected from the group consisting of BN(boron nitride), boehmite, Al₂O₃, TiO₂, Fe₂O₃, SiO₂, ZrO₂, Co₃O₄, SnO₂, NiO, ZnO, V₂O₅, LiF and MnO, but are not limited thereto. Specifically, the ceramic particles may include one or more selected from the group consisting of BN(boron nitride), boehmite, Al₂O₃, and LiF, and more specifically, may include BN(boron nitride) and boehmite.

The average diameter(D50) of the ceramic particles may be 30 nanometers to 5 micrometers, specifically 50 nanometers to 3 micrometers, more specifically 50 nanometers to 1 micrometer, which is in a range smaller than the thickness of the coating layer. Moreover, when compared with the thickness of the coating layer, it may be 1/100 to 1/3 or less of the total thickness of the coating layer.

When the average particle diameter D₅₀ of the ceramic particles is smaller, aggregation between particles occurs due to a decrease in the dispersibility of the particles, and if the average diameter is larger, there is a problem that a lithium dendrite growth path may be formed.

As used herein, the average particle diameter D₅₀ means a particle size at which cumulative volumes of particles reach 50% in the particle size distribution curve of the particles. The D₅₀ can be measured using, for example, a laser diffraction method. The laser diffraction method can generally measure particle sizes ranging from a submicron range to several millimeters, and can obtain results with high reproducibility and high resolvability.

According to the present disclosure, the coating layer must come into an opposing contact with the negative electrode, and when the coating layer is formed of two or more layers, in addition to the first coating layer that comes into an opposing contact with the negative electrode, the second coating layer may come into an opposing contact with the positive electrode.

In this case, as explained above, the first coating layer may include particles selected from i) to iii), and the second coating layer may include iii) when i) or ii) is included in the first coating layer, and include either i) or ii) when iii) is included in the first coating layer. However, the first coating layer faces the negative electrode, and therefore, if a side reaction with the negative electrode occurs in the voltage region of the negative electrode, the efficiency may be lowered, which may lead to a decrease in capacity and energy density. In this regard, it is preferable to use a material with less side reaction with the negative electrode. Therefore, it is preferable to include ceramic particles having an absolute value of zeta potential of 25 mV or more in iii), which is relatively free from side reactions, and specifically, it may include one or more ceramic particles selected from the group consisting of boron nitride (BN), boehmite, Al₂O₃, and LiF.

At this time, if the second coating layer causes a side reaction with the positive electrode in the voltage range of the positive electrode, the efficiency may be lower and a reduction in capacity and energy density may appear. Thus, it is preferable to use a material that has little side reaction with the positive electrode. However, since the surface of the positive electrode is relatively more stable than that of the negative electrode and side reactions are not a major problem, materials that are more advantageous for improving performance can be used, and an oxide-based solid electrolyte can be included, and therefore, i) or ii) can be included.

Most specifically, the first coating layer includes one or more ceramic particles selected from the group consisting of boron nitride(BN), boehmite, Al₂O₃, and LiF, wherein the absolute value of the zeta potential is 25 mV or more. The second coating layer may include one or more selected from the group consisting of boron nitride(BN), boehmite, Al₂O₃, LiF, and oxide-based solid electrolyte particles.

Meanwhile, one or more of the first coating layer and the second coating layer may further include polymer particles each having an absolute value of zeta potential of 25 mV or more.

Here, the polymer particles may be particles having a surface charge. Alternatively, the polymer particles may include both particles with surface charge and particles without surface charge. The surface charge may show on the particles themselves, or may be formed by physical or chemical surface treatment.

Herein, the absolute value of the zeta potential of the polymer particles may be 25 mV or more, specifically 35 mV or more, and more specifically 45 mV or more. When the absolute value of the zeta potential satisfies the above range, the flame retardant electrolyte can be easily impregnated into the coating layer even when applying a flame retardant electrolyte to a lithium secondary battery containing the electrode according to the present disclosure, so that a uniform reaction can occur throughout the electrode, and thus, performances such as capacity, output, and life characteristics of the lithium secondary battery can be improved.

Specifically, the polymer particles may include one or more selected from the group consisting of polyethylene oxide(PEO), polyphenylene sulfide(PPS), polymethyl(meth)acrylate(PMMA), polystyrene, polyvinyl chloride, polycarbonate, polysulfone, polyethersulfone, polyetherimide, polyphenylsulfone, polyamideimide, polyimide, polybenzimidazole, polyether ketone, polyphthalamide, polybutylene terephthalate, and polyethylene terephthalate, but are not limited thereto. Specifically, the polymer particles may include polymethyl methacrylate.

The average diameter(D50) of the polymer particles may be 50 nanometers to 3 micrometers, specifically 50 nanometers to 2 micrometers, more specifically 50 nanometers to 1.5 micrometer, which is in a range smaller than the thickness of the coating layer. Moreover, when compared with the thickness of the coating layer, it may be 1/100 to 1/3 or less of the thickness of the coating layer.

When the average diameter(D50) of the polymer particles satisfies the above numerical range, the dispersibility of particles contained in the coating layer is improved, and pores of appropriate size are uniformly formed in the coating layer, thereby improving the mobility of lithium ions. On the other hand, when the average diameter(D50) of the polymer particles is smaller than 50 nanometers, aggregation between particles occurs due to a decrease in the dispersibility of the particles, and the pores are clogged by the aggregated particles, thereby capable of reducing the mobility of lithium ions and increasing resistance. If the average diameter(D50) of the polymer particles is greater than 3 micrometers, there is a problem that a lithium dendrite growth path may be formed, as described above.

When the oxide-based solid electrolyte particles and/or the ceramic particles are included together with the polymer particles, the polymer particles may be included in an amount of 10% by weight to 40% by weight, specifically 20% by weight to 40% by weight, and more specifically 20 to 30% by weight, based on the total weight of respective coating layers.

Meanwhile, in the coating layer where the oxide-based solid electrolyte particles are mixed and used with the ceramic particles, the oxide-based solid electrolyte particles and the ceramic particles may be mixed at a weight ratio of 9:1 to 1:9, and specifically at a weight ratio of 7:3 to 3:7.

When the above range is satisfied, the pore uniformity, heat resistance, and electrolyte impregnation properties in the coating layer are most excellent.

In another specific embodiment, the electrode assembly may further include a separator, in which case the second coating layer may come into an opposing contact with the positive electrode, the separator, or both the positive electrode and the separator.

In this case, as explained above, the first coating layer may include particles selected from i) to iii), and the second coating layer may include iii) when i) or ii) is included in the first coating layer, and include either i) or ii) when iii) is included in the first coating layer, however, for the reasons described above, the first coating layer facing the negative electrode may include iii), and the second coating layer may include either i) or ii), most specifically, the first coating layer includes one or more ceramic particles selected from the group consisting of boron nitride(BN), boehmite, Al₂O₃, and LiF, and the second coating layer preferably includes one or more selected from the group consisting of boron nitride(BN), boehmite, Al₂O₃, LiF, and oxide-based solid electrolyte particles. Meanwhile, at this time, one or more of the first coating layer and the second coating layer may further include polymer particles each having an absolute value of zeta potential of 25 mV or more.

Here, the polymer particles may be particles having a surface charge. Alternatively, it may include both particles with surface charge and particles without surface charge. The surface charge may show on the particles themselves, or may be formed through physical or chemical surface treatment.

Herein, the absolute value of the zeta potential of the polymer particles may be 25 mV or more, specifically 35 mV or more, and more specifically 45 mV or more. When the absolute value of the zeta potential satisfies the above range, the flame retardant electrolyte can be easily impregnated into the coating layer even when applying a flame retardant electrolyte to a lithium secondary battery containing the electrode according to the present disclosure, so that a uniform reaction can occur throughout the electrode, and thus, performances such as capacity, output, and life characteristics of the lithium secondary battery can be improved.

Specifically, the polymer particles may include one or more selected from the group consisting of polyethylene oxide(PEO), polyphenylene sulfide(PPS), polymethyl(meth)acrylate(PMMA), polystyrene, polyvinyl chloride, polycarbonate, polysulfone, polyethersulfone, polyetherimide, polyphenylsulfone, polyamideimide, polyimide, polybenzimidazole, polyether ketone, polyphthalamide, polybutylene terephthalate, and polyethylene terephthalate, but are not limited thereto. Specifically, the polymer particles may include polymethyl methacrylate.

The average diameter(D50) of the polymer particles may be 50 nanometers to 3 micrometers, specifically 50 nanometers to 2 micrometers, more specifically 50 nanometers to 1.5 micrometer, which is in a range smaller than the thickness of the coating layer. Moreover, when compared with the thickness of the coating layer, it may be 1/100 to 1/3 or less of the thickness of the coating layer.

When the average diameter(D50) of the polymer particles satisfies the above numerical range, the dispersibility of particles contained in the coating layer is improved, and pores of appropriate size are uniformly formed in the coating layer, thereby improving the mobility of lithium ions. On the other hand, when the average diameter(D50) of the polymer particles is smaller than 50 nanometers, aggregation between particles occurs due to a decrease in the dispersibility of the particles, and the pores are clogged by the aggregated particles, thereby capable of reducing the mobility of lithium ions and increasing resistance. If the average diameter(D50) of the polymer particles is greater than 3 micrometers, there is a problem that a lithium dendrite growth path may be formed, as described above.

When the oxide-based solid electrolyte particles and/or the ceramic particles are included together with the polymer particles, the polymer particles may be included in an amount of 10% by weight to 40% by weight, specifically 20% by weight to 40% by weight, and more specifically 20 to 30% by weight, based on the total weight of respective coating layers.

Further, in the coating layer where the oxide-based solid electrolyte particles are mixed and used with the ceramic particles, the oxide-based solid electrolyte particles and the ceramic particles may be mixed at a weight ratio of 9:1 to 1:9, and specifically at a weight ratio of 7:3 to 3:7.

When the above range is satisfied, the pore uniformity, heat resistance, and electrolyte impregnation properties in the coating layer are most excellent.

Meanwhile, each coating layer may further include one or more additive selected from the group consisting of a binder and a dispersant.

The dispersant suppresses a phenomenon in which the polymer particles are excessively aggregated in the coating layer, and enables the polymer particles to be effectively dispersed and present in the coating layer.

The dispersant may include a hydrogenated nitrile-based polymer. Specifically, the dispersant may be a hydrogenated nitrile-based copolymer, and more specifically, a hydrogenated nitrile butadiene rubber(H-NBR).

The hydrogenated nitrile-based copolymer may be a copolymer containing a structural unit derived from α,β-unsaturated nitrile and a structural unit derived from a hydrogenated conjugated diene, or may be a copolymer containing a structural unit derived from α,β-unsaturated nitrile, a structural unit derived from a conjugated diene, and a structural unit derived from a hydrogenated conjugated diene. As the α,β-unsaturated nitrile monomer, for example, acrylonitrile, methacrylonitrile, or the like may be used, and any one alone or a mixture of two or more thereof may be used. As the conjugated diene-based monomer, for example, conjugated diene-based monomers having 4 to 6 carbon atoms such as 1,3-butadiene, isoprene, or 2,3-methyl butadiene may be used, and any one alone or a mixture of two or more thereof may be used.

The dispersant may be included in an amount of 1% by weight to 15% by weight, specifically 1% by weight to 10% by weight, and more specifically 1% by weight to 5% by weight, based on the total weight of respective coating layers. When the content of the dispersant satisfies the above range, the dispersibility of the particles contained in the coating layer is improved and pores are uniformly formed in the coating layer, so that cracks on the surface of the coating layer can be remarkably reduced.

The binder serves to improve adhesive force between the particles of the coating layer and the electrode and separator.

Examples of the binder may include one or more selected from the group consisting of polyvinylidene fluoride(PVDF), polyvinyl alcohol(PVA), carboxymethylcellulose(CMC), starch, hydroxypropyl cellulose, regenerated cellulose, polyvinylpyrrolidone(PVP), polytetrafluoroethylene, polyethylene, polypropylene, ethylene-propylene-diene monomer, sulfonated ethylene-propylene-diene monomer, styrene-butadiene rubber, and fluoro rubber. Specifically, the binder may include polyvinylidene fluoride.

The binder may be contained in an amount of 0.1% by weight to 15% by weight, specifically 0.5% by weight to 10% by weight, and more specifically 1% by weight to 5% by weight, based on the total weight of respective coating layers. When the content of the binder is outside the above range and is too small, the effect of improving adhesive force cannot be expected. When the content of the binder is too large, the content of other particles is relatively reduced, which is not preferable.

The above-mentioned coating layer may have electrical insulating properties. In this case, the coating layer may correspond to a porous insulating layer, but is not limited thereto.

The coating layer has a property that does not easily shrink even at high temperatures. Therefore, when applying a coating layer to an electrode assembly, a short circuit between the positive electrode and the negative electrode can be prevented even in a high-temperature environment, thereby improving high-temperature safety of the lithium secondary battery.

### <Electrode Assembly>

Hereinafter, electrode assemblies of various structures will be described with reference to the drawings.

In one example, the coating layer may be wholly coated onto the positive electrode, or be wholly coated onto the negative electrode, or one or more coating layers may be coated onto each of the positive electrode and the negative electrode.

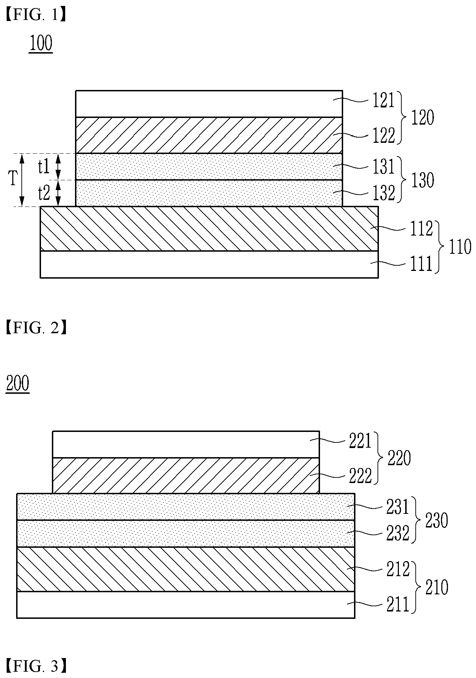

FIGS. 1 and 2 show the configuration in which the coating layer is formed on either the positive electrode or the negative electrode, and FIG. 3 shows a configuration in which the coating layer is formed on the positive electrode and the negative electrode, respectively.

Specifically, FIG. 1 schematically shows an electrode assembly 100 having a structure in which two or more coating layers are wholly formed on the positive electrode instead of a separator, FIG. 2 schematically shows an electrode assembly 200 having a structure in which two or more coating layers are wholly formed on the negative electrode instead of a separator, and FIG. 3 schematically shows an electrode assembly 300 having a structure in which two or more coating layers are formed, one layer on the positive electrode and one layer on the negative electrode.

First, referring to FIG. 1, the electrode assembly 100 according to an embodiment of the present disclosure includes a negative electrode 110, a positive electrode 120, and a coating layer 130.

The negative electrode 110 has a structure in which a negative electrode active material layer 112 is formed on a negative electrode current collector 111. Here, the negative electrode active material layer includes electrode materials such as a negative electrode active material, a conductive material, and a binder. Alternatively, although not shown in the figure, the negative electrode may be a graphite electrode made of carbon(C), or may be metal itself.

The negative electrode current collector 111 is not particularly limited as long as it has high conductivity without causing a chemical change in the battery, and, for example, copper, stainless steel, aluminum, nickel, titanium, calcinated carbon, copper or stainless steel that is surface-treated with one of carbon, nickel, titanium, silver, or the like, an aluminum-cadmium alloy, or the like may be used.

The negative electrode collector 111 may generally have a thickness of 3 *µ*m to 500 *µ*m. Also, similar to the positive electrode collector, the negative electrode current collector may have fine protrusions and depressions formed on a surface thereof to enhance adherence of a negative electrode active material. For example, the negative electrode current collector may be used in various forms such as a film, a sheet, a foil, a net, a porous body, a foaming body, and a non-woven fabric structure.

The negative electrode active material may comprise one or more selected from the group consisting of lithium metal, a carbon material capable of reversibly intercalating/deintercalating lithium ions, metals or alloys of lithium and these metals, a metal composite oxide, a material which may be doped and undoped with lithium, and a transition metal oxide.

As the carbon material capable of reversibly intercalating/deintercalating lithium ions, any carbon material may be used without particular limitation so long as it is a carbon-based negative electrode active material generally used in a lithium ion secondary battery, and, as a typical example, crystalline carbon, amorphous carbon, or both thereof may be used. Examples of the crystalline carbon may be graphite such as irregular, planar, flaky, spherical, or fibrous natural graphite or artificial graphite, and examples of the amorphous carbon may be soft carbon (lowtemperature calcinated carbon) or hard carbon, mesophase pitch carbide, and fired cokes.

As the metals or alloys of lithium and these metals, metals selected from the group consisting of Cu, Ni, Na, K, Rb, Cs, Fr, Be, Mg, Ca, Sr, Si, Sb, Pb, In, Zn, Ba, Ra, Ge, Al and Sn or alloys of lithium and these metals may be used.

One selected from the group consisting of PbO, PbO₂, Pb₂O₃, Pb₃O₄, Sb₂O₃, Sb₂O₄, Sb₂O₅, GeO, GeO₂, Bi₂O₃, Bi₂O₄, Bi₂O₅, LixFe₂O₃(0≤x≤1), LiₓWO₂(0≤x≤1) and SnₓMe₁₋ₓMe'_{y}O_{z} (Me: Mn, Fe, Pb, Ge; Me': Al, B, P, Si, Groups I, II and III elements of the periodic table, or halogen; 0<x≤1; 1≤y≤3; 1≤z≤8) can be used as the metal composite oxide.

The material, which may be doped and undoped with lithium, may include Si, SiOₓ (0<x≤2), a Si-Y alloy (where Y is an element selected from the group consisting of alkali metal, alkaline earth metal, a Group 13 element, a Group 14 element, transition metal, a rare earth element, and a combination thereof, and is not Si), Sn, SnO₂, and Sn-Y (where Y is an element selected from the group consisting of alkali metal, alkaline earth metal, a Group 13 element, a Group 14 element, transition metal, a rare earth element, and a combination thereof, and is not Sn), and a mixture of SiO₂ and one or more thereof may also be used. The element Y may be selected from the group consisting of Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ge, P, As, Sb, Bi, S, Se, Te, Po, and a combination thereof.

The transition metal oxide may include lithium-containing titanium composite oxide (LTO), vanadium oxide, lithium vanadium oxide, and the like.

The negative electrode active material may be contained in an amount of 60 to 99% by weight, preferably 70 to 99% by weight, and more preferably 80 to 98% by weight, based on a total weight of the negative electrode active material layer.

Further, the conductive material is a component that further improves the conductivity of the negative electrode active material. Such a conductive material is not particularly limited as long as it has conductivity without causing a chemical change in the battery, and, for example, a conductive material, such as: carbon powder such as carbon black, acetylene black, Ketjen black, channel black, furnace black, lamp black, or thermal black; graphite powder such as natural graphite with a well-developed crystal structure, artificial graphite, or graphite; conductive fibers such as carbon fibers or metal fibers; fluorinated carbon powder; conductive powder such as aluminum powder, and nickel powder; conductive whiskers such as zinc oxide whiskers and potassium titanate whiskers; conductive metal oxide such as titanium oxide; or polyphenylene derivatives, may be used.

The conductive material may be contained in an amount of 0.1 to 10% by weight, specifically 0.5 to 5% by weight, and more specifically 0.5 to 3% by weight, based on the total weight of the negative electrode active material layer.

Further, the binder is a component that assists in the binding between the conductive material, the negative electrode active material and the negative electrode current collector. Examples of the binder may include polyvinylidene fluoride(PVDF), polyvinyl alcohol, starch, carboxymethylcellulose(CMC), starch, hydroxypropyl cellulose, regenerated cellulose, polyvinylpyrrolidone, polyethylene, polypropylene, ethylene-propylene-diene monomer, and a sulfonated ethylene-propylene-diene monomer, a styrene-butadiene rubber, a fluoro rubber, various copolymers thereof, and the like.

Typically, the binder may be contained in an amount of 0.5 to 10% by weight, specifically 0.5 to 5% by weight, and more specifically 0.5 to 3% by weight based on the total weight of the negative electrode active material layer.

When the metal itself is used without forming a negative electrode active material layer on the negative electrode, it can be manufactured by a method of physically joining, rolling, or depositing a metal on the metal thin film itself or the negative electrode current collector. As the deposition method, an electrical deposition method or a chemical vapor deposition method of the metal may be used.

For example, the metal thin film itself or the metal joined/rolled/deposited on the negative electrode current collector may include one type of metal selected from the group consisting of lithium(Li), nickel(Ni), tin(Sn), copper(Cu), and indium(In), or an alloy of two types thereof.

The positive electrode 120 has a structure in which the positive electrode active material layer 122 is formed on the positive electrode current collector 121. Here, the positive electrode active material layer includes electrode materials such as a positive electrode active material, a conductive material, and a binder.

The positive electrode current collector 121 is not particularly limited as long as it has high conductivity without causing a chemical change in the battery, and, for example, stainless steel, aluminum, nickel, titanium, calcinated carbon, or aluminum or stainless steel of which surface is treated with carbon, nickel, titanium, silver, or the like can be used as the current collector.

Further, the positive electrode current collector 121 may generally have a thickness of 3 *µ*m to 500 *µ*m, and the positive electrode current collector may have fine protrusions and depressions formed on an entire surface thereof to enhance adherence of a positive electrode active material. For example, the positive electrode current collector may be used in various forms such as a film, a sheet, a foil, a net, a porous body, a foaming body, and a non-woven fabric structure.

The positive electrode active material may be a compound capable of reversibly intercalating and deintercalating lithium, and specifically, it may include lithium metal oxide containing lithium and one or more metal such as cobalt, manganese, nickel or aluminum. More specifically, the lithium metal oxide may include lithium-manganese-based oxide (e.g., LiMnO₂, LiMn₂O₄, etc.), lithium-cobalt-based oxide (e.g., LiCoO₂, etc.), lithium-nickel-based oxide (e.g., LiNiO₂, etc.), lithium-nickel-manganese-based oxide (e.g., LiNi_{1-Y}Mn_{Y}O₂ (where 0<Y<1), LiMn_{2-Z}Ni_{Z}O₄ (where 0<Z<2), etc.), lithium-nickel-cobalt-based oxide (e.g., LiNi_{1-Y1}Co_{Y1}O₂ (where 0<Y1<1, etc.), lithium-manganese-cobalt-based oxide (e.g., LiCo_{1-Y2}Mn_{Y2}O₂ (where 0<Y2<1), LiMn_{2-Z1}Co_{Z1}O₄ (where 0<Z1<2), etc.), lithium-nickel-manganese-cobalt-based oxide (e.g., Li(NiₚCo_{q}Mnᵣ)O₂ (where 0<p<1, 0<q<1, 0<r<1, and p+q+r=1) or Li(Niₚ₁Co_{q1}Mnᵣ₁)O₄ (where 0<p1<2, 0<q1<2, 0<r1<2, and p1+q1+r1=2), etc.), or lithium-nickel-cobalt-transition metal(M) oxide (e.g., Li(Niₚ₂Co_{q2}Mnᵣ₂Mₛ₂)O₂ (where M is selected from the group consisting of Al, Fe, V, Cr, Ti, Ta, Mg and Mo, and p2, q2, r2, and s2 are atomic fractions of each independent elements, wherein 0<p2<1, 0<q2<1, 0<r2<1, 0<s2<1, and p2+q2+r2+s2=1), etc.), lithium iron phosphate (e.g., Li₁₊ₐFe₁₋ₓMₓ(PO_{4-b})X_{b} (where M is one or more selected from Al, Mg, and Ti, X is one or more selected from F, S and N, -0.5≤a≤0.5, 0≤x≤0.5, 0≤b≤0.1), or the like, and any one thereof or a compound of two or more thereof may be used.

Among these compounds, in terms of the improvement of capacity characteristics and stability of the battery, the lithium metal oxide may include LiCoO₂, LiMnO₂, LiNiO₂, lithium nickel manganese cobalt oxide (e.g., Li(Ni_{1/3}Mn_{1/3}Co_{1/3})O₂, Li(Ni_{0.6}Mn_{0.2}Co_{0.2})O₂, Li(Ni_{0.5}Mn_{0.3}Co_{0.2})O₂, Li(Ni_{0.7}Mn_{0.15}Co_{0.15})O₂ and Li(Ni_{0.8}Mn_{0.1}Co_{0.1})O₂, etc.), lithium nickel cobalt aluminum oxide (e.g., Li(Ni_{0.8}Co_{0.15}Al_{0.05})O₂, etc.), or lithium nickel manganese cobalt aluminum oxide (e.g., Li(Ni_{0.86}Co_{0.05}Mn_{0.07}Al_{0.02})O₂), or lithium iron phosphate (e.g., LiFePO₄) or the like, and any one alone or a mixture of two or more thereof may be used.

The positive electrode active material may be contained in an amount of 60 to 99% by weight, preferably 70 to 99% by weight, and more preferably 80 to 98% by weight based on the total weight of the positive electrode active material layer.

The description of the conductive material and binder is the same as that of the negative electrode active material layer.

Meanwhile, the coating layer 130 is formed between the positive electrode 120 and the negative electrode 110.

Here, the coating layer 130 includes a first coating layer 132 facing the negative electrode 110. Further, it includes a second coating layer 131 facing the positive electrode 120.

At this time, the coating layer may be formed such that the second coating layer 131 is first coated on the positive electrode 120, and then the first coating layer 132 is coated on the second coating layer 131.

At this time, the respective thicknesses t2 and t1 of the first coating layer 132 and the second coating layer 131 may be 1 micrometer to 30 micrometers, specifically 3 micrometers to 20 micrometers, and more specifically, 5 micrometers to 15 micrometers. Further, the total thickness T may be 3 micrometers to 50 micrometers. If the thickness is outside the above range and is too thin, the effect intended by the present application cannot be obtained, and the physical insulation between the positive electrode 120 and the negative electrode 110 cannot be sufficiently ensured. If the thickness is too thick, resistance may increase, which is not preferable.

Further, the ratio of these thicknesses t1 and t2 may be 1:9 to 9:1, specifically 3:7 to 7:3, more specifically 6:4 to 4:6, and most specifically 5:5.

The ratio of these thicknesses t1 and t2 can be appropriately selected in consideration of the characteristics of the battery to be manufactured.

The total thickness T of the coating layer 130 and the thicknesses t1 and t2 of the respective coating layers 131 and 132 can be easily measured using a thickness gauge or a cross-sectional SEM photograph.

Further, the area of the coating layers 131 and 132 may be formed to have a width that can wholly insulate the positive electrode 120 and the negative electrode 110. Specifically, when the positive electrode 110 is larger than the negative electrode 120, it is not limited as long as it has an area equal to or larger than the positive electrode 120. However, for ease of manufacturing process, the coating layers 131 and 132 may be formed to have an area corresponding to the entire area of the object to be coated.

FIG. 1 shows, as an example, a structure in which a second coating layer 131 is formed on the positive electrode 120, and a first coating layer 132 is formed on the second coating layer 131, wherein the second coating layer 131 may be formed to have an area corresponding to the positive electrode 120, and the first coating layer 132 may be formed to have an area corresponding to the second coating layer 131. Therefore, the areas of the second coating layer 131 and the first coating layer 132 may be the same. Of course, the area is not limited as long as it is an area capable of insulating the positive electrode 120 and the negative electrode 110 as a whole, wherein the second coating layer 131 may be formed wider, and the first coating layer 132 is formed smaller than the second coating layer 131. Specifically, as an example, each of the coating layers 131 and 132 can be formed by coating a composition for forming a second coating layer onto the positive electrode 120 and drying it, or can be formed by coating a composition for forming a first coating layer onto the second coating layer 131 and drying it. At this time, the composition for forming the second coating layer and the composition for forming the first coating layer may be applied and dried separately or together, and may be formed simultaneously or sequentially on the time base. Alternatively, the coating layers 131 and 132 are formed as a free-standing film and attached to the positive electrode 120, or it may be formed by a method of coating and drying the composition for forming the second coating layer and the composition for forming the first coating layer onto a substrate and then transferring it onto the positive electrode 120, and the method is not limited. In the following, a method of forming the coating layer by coating and drying the composition for forming the first coating layer and the composition for forming the second coating layer on an electrode or separator will be described, but it goes without saying that the method is not limited thereto, and can be formed by various methods.

In FIG. 1, the coating layer 130 also performs the role of electrical insulation instead of the separator.

Meanwhile, referring to FIG. 2, an electrode assembly 200 having a structure in which a coating layer 230 is formed between a positive electrode 220 and a negative electrode 210 is illustrated. The positive electrode 220 has a structure in which a positive electrode active material layer 222 is formed on the positive electrode current collector 221, and the negative electrode 210 has a structure in which a negative electrode active material layer 212 is formed on a negative electrode current collector 211.

At this time, the coating layer 230 also includes a second coating layer 231 facing the positive electrode 220 and a first coating layer 232 facing the negative electrode 210, similar to the electrode assembly 100 of FIG. 1.

However, unlike FIG. 1, the coating layer may be formed such that the first coating layer 232 is first coated onto the negative electrode 210, and then the second coating layer 231 is coated onto the first coating layer 232.

Therefore, the area of the coating layers 231 and 232 may be formed to have an area corresponding to the entire area of the object to be coated to facilitate the manufacturing process, in an area that can wholly insulate the positive electrode 220 and the negative electrode 210.

FIG. 2 discloses, as an example, a structure in which a first coating layer 232 is formed on the negative electrode 210 and a second coating layer 231 is formed on the first coating layer 232, wherein the first coating layer 232 may be formed to have an area corresponding to the negative electrode 210, and the second coating layer 231 may be formed to have an area corresponding to the first coating layer 232. Therefore, the areas of the first coating layer 232 and the second coating layer 231 may be the same. Of course, the area is not limited as long as is an area capable of insulating the positive electrode 220 and the negative electrode 210 as a whole, wherein the first coating layer 232 may be formed wider, and the second coating layer 231 may be formed smaller than the first coating layer 232. Specifically, as an example, each of the coating layers 231 and 232 can be formed by coating the composition for forming the first coating layer onto the negative electrode 210 and drying it, or can be formed by coating the composition for forming the second coating layer onto the first coating layer 232 and drying it.

The other thickness and manufacturing method of the coating layer 230 are the same as described in FIG. 1.

Further, referring to FIG. 3, in another example, an electrode assembly 300 in which a coating layer 330 is formed between the positive electrode 320 and the negative electrode 310 is illustrated. The positive electrode 320 has a structure in which a positive electrode active material layer 322 is formed on a positive electrode current collector 321, and the negative electrode 310 has a structure in which a negative electrode active material layer 312 is formed on a negative electrode current collector 311.

At this time, the coating layer 330 also includes a second coating layer 331 facing the positive electrode 320 and a first coating layer 332 facing the negative electrode 310, similar to the electrode assembly 100 of FIG. 1.

However, unlike FIG. 1, the coating layer may be formed such that the second coating layer 331 is coated onto the positive electrode 320, and the first coating layer 332 is coated onto the negative electrode 310.

Therefore, the area of the coating layers 331 and 332 may be formed to have an area corresponding to the entire area of the object to be coated to facilitate the manufacturing process, in an area that can wholly insulate the positive electrode 320 and the negative electrode 310.

FIG. 3 discloses, as an example, a structure in which a first coating layer 332 is formed on the negative electrode 310 and a second coating layer 331 is formed on the positive electrode 320, wherein the first coating layer 332 may be formed to have an area corresponding to the negative electrode 310, and the second coating layer 331 may be formed to have an area corresponding to the positive electrode 320. Therefore, the first coating layer 332 may be formed wider than the second coating layer 331. Of course, the first coating layer 332 and the second coating layer 331 may be formed to have the same area. Specifically, as an example, each of the coating layers 331 and 332 can be formed by coating a composition for forming a first coating layer on the negative electrode 310 and drying it, or can be formed by coating a composition for forming a second coating layer onto the positive electrode 320 and drying it.

The other thickness and manufacturing method of the coating layer 330 are the same as described above in FIG. 1.

Meanwhile, the electrode assembly may further include a separator.

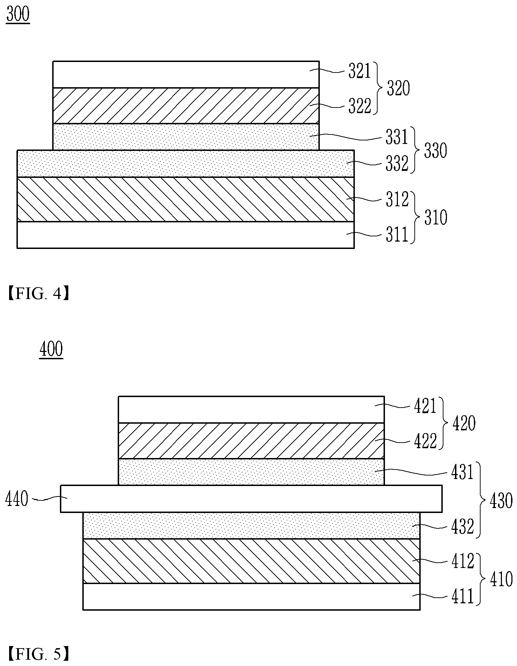

Therefore, FIGS. 4 to 7 illustrate electrode assemblies 400, 500, 600 and 700 having a structure similar to that of FIG. 1 and further including a separator.

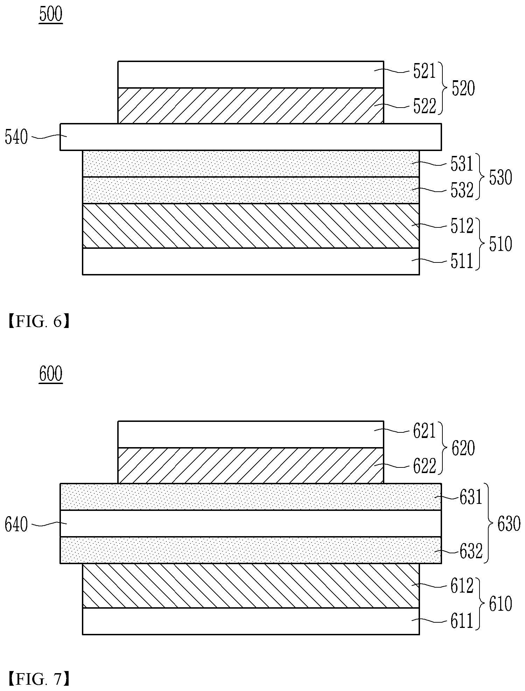

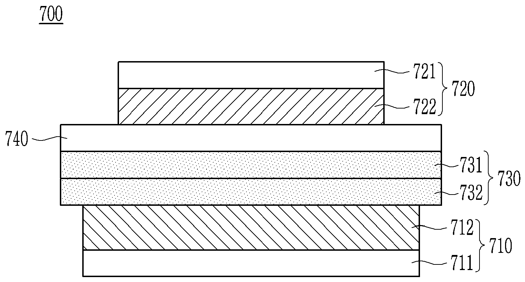

At this time, the coating layer is wholly coated onto the negative electrode, or one or more coating layers are coated onto each of the positive electrode and the negative electrode, or the coating layer is wholly coated onto one side of the separator facing the negative electrode, or one or more coating layers may be coated onto both surfaces of the separator. FIGS. 4 to 5 illustrate a configuration in which the coating layer is formed onto the positive electrode and the negative electrode, respectively, or is formed only on the negative electrode, and FIGS. 6 and 7 illustrate a configuration in which the coating layer is formed on one side or both sides of the separator.

Specifically, FIG. 4 schematically shows the electrode assembly 400 having a structure in which a separator is interposed between each of two or more coating layers in the electrode assembly 300 of FIG. 3. FIG. 5 schematically shows the electrode assembly 500 having a structure in which a separator is interposed between the positive electrode and two or more coating layers in the electrode assembly 200 of FIG. 2. Although not shown in the figure, the shape of the separator in the electrode assembly of FIGS. 1 to 3 is not limited as long as it is a shape being interposed between the positive electrode and the coating layer or between the coating layers. This will be explained with reference to FIGS. 4 and 5 as a representative example.

Of course, FIGS. 4 to 5 will be structurally explained with reference to FIGS. 1 to 3, however, the coating layer facing the electrode and the coating layer facing the separator may be compositionally different depending on the need as described above.

First, referring to FIG. 4, an electrode assembly 400 having a structure in which a coating layer 430 and a separator 440 are formed between a positive electrode 420 and a negative electrode 410 is illustrated. The positive electrode 420 has a structure in which a positive electrode active material layer 422 is formed on a positive electrode current collector 421, and the negative electrode 410 has a structure in which a negative electrode active material layer 412 is formed on a negative electrode current collector 411.

At this time, the coating layer 430 includes a second coating layer 431 facing the positive electrode 420 and a first coating layer 432 facing the negative electrode 410 as shown in FIG. 3, and may be formed such that the second coating layer 431 can be coated onto the positive electrode 420, and the first coating layer 432 is coated onto the negative electrode 410.

Therefore, the description of the area, manufacturing method, thickness, and the like of the coating layers 431 and 432 is the same as that described above in FIG. 3.

However, the electrode assembly 400 of FIG. 4 may further include a separator 440 between the first coating layer 432 and the second coating layer 431.

Here, the separator can be used without particular limitation as long as it is typically used as a separator in a lithium secondary battery. Particularly, a separator having high moistureretention ability for an electrolyte as well as low resistance to the movement of electrolyte ions is preferable.

For example, as the separator, a porous polymer film produced using a polyolefin-based polymer such as an ethylene homopolymer, a propylene homopolymer, an ethylene/butene copolymer, or a laminated structure having two or more layers thereof may be used. Also, a typical porous non-woven fabric, for example, a non-woven fabric formed of glass fiber having a high melting point, polyethylene terephthalate fiber, or the like can be used as the separator.

The thickness of the separator may be 5 micrometers to 20 micrometers, specifically 5 micrometers to 15 micrometers, and more specifically 6 micrometers to 13 micrometers. If the thickness of the separator satisfies the above range, it is possible to effectively prevent short circuits between the positive electrode and the negative electrode while minimizing the resistance value of the lithium secondary battery. As a result, it is possible to prevent a decrease in energy density of lithium secondary batteries and improve life characteristics.

Meanwhile, referring to FIG. 5, an electrode assembly 500 having a structure in which a coating layer 530 and a separator 540 are formed between the positive electrode 520 and the negative electrode 510 is illustrated. The positive electrode 520 has a structure in which a positive electrode active material layer 522 is formed on a positive electrode current collector 521, and the negative electrode 510 has a structure in which a negative electrode active material layer 512 is formed on a negative electrode current collector 511.

At this time, the coating layer 530 includes a first coating layer 532 facing the negative electrode 510 and a second coating layer 531 facing the separator. At this time, the second coating layer 531 corresponds to the second coating layer in FIG. 2 in terms of manufacturing method and structure. Therefore, as shown in FIG. 2, the coating layer may be formed such that the first coating layer 532 is coated onto the negative electrode 510, and the second coating layer 531 is coated onto the first coating layer 532.

Therefore, the description of the area, manufacturing method, thickness, and the like of the coating layers 531 and 532 is the same as that described above in FIG. 2.

However, the electrode assembly 500 of FIG. 5 may further include a separator 540 between the positive electrode 520 and the second coating layer 531.

Meanwhile, in another example of a structure where the electrode assembly includes the separator, FIGS. 6 and 7 show a structure in which the coating layer is formed on one side or both sides of the separator. Specifically, FIIG. 6 shows a structure in which the coating layer are coated as one or more layers onto both sides of the separator, and FIG. 7 shows a structure in which all coating layers are coated onto one side of the separator facing the negative electrode.

First, referring to FIG. 6, an electrode assembly 600 having a structure in which a coating layer 630 and a separator 640 are formed between the positive electrode 620 and the negative electrode 610. Here, the positive electrode 620 has a structure in which the positive electrode active material layer 622 is formed on the positive electrode current collector 621, and the negative electrode 610 has a structure in which a negative electrode active material layer 612 is formed on a negative electrode current collector 611.

At this time, the coating layer 630 includes a second coating layer 631 facing the positive electrode 620 and a first coating layer 632 facing the negative electrode 610.

However, the first coating layer 632 and the second coating layer 631 can be formed by coating to both sides of the separator 640. That is, the coating layers 631 and 632 may be formed by coating the first coating layer forming composition and the second coating layer forming composition onto both sides of the separator 640, followed by drying.

Therefore, the area of the coating layers 631 and 632 may be formed to have an area corresponding to the entire area of the object to be coated to facilitate the manufacturing process, in an area that can wholly insulate the positive electrode 620 and the negative electrode 610, and therefore, may be formed to have an area corresponding to the area of the separator 640. Of course, it goes without saying that the area can be formed smaller than the width of the separator 640 as long as it can wholly insulate the positive electrode 620 and the negative electrode 610.

In addition, the description of the thickness of the coating layers 631 and 632 is the same as that described above in FIG. 1.

Meanwhile, referring to FIG. 7, an electrode assembly 700 having a structure in which a coating layer 730 and a separator 740 are formed between the positive electrode 720 and the negative electrode 710. Here, the positive electrode 720 has a structure in which a positive electrode active material layer 722 is formed on the positive electrode current collector 721, and the negative electrode 710 has a structure in which a negative electrode active material layer 712 is formed on a negative electrode current collector 711.

At this time, the coating layer 730 includes a second coating layer 731 facing the separator 740 and a first coating layer 732 facing the negative electrode 710.

However, the second coating layer 731 and the first coating layer 732 can be formed by wholly coating to one surface of the separator 740. That is, the composition for forming a second coating layer is first coated onto one side of the separator 740 and dried to form the second coating layer 731, and the composition for forming a first coating layer can be coated onto the second coating layer 731 and dried to form a first coating layer 732.

Subsequently, the first coating layer 732 and the negative electrode 710 can be stacked in a direction facing each other.

Therefore, the area of the coating layers 731 and 732 can be formed to have an area corresponding to the entire area of the object to be coated to facilitate the manufacturing process, in an area that can wholly insulate the positive electrode 720 and the negative electrode 710. Of course, it goes without saying that if the area is sufficient to insulate the positive electrode 720 and the negative electrode 710 as a whole, the areas of the coating layers 731 and 732 may be different from each other, and may be formed smaller than the area of the separator 740..

Further, although not shown in the figure, it goes without saying that a second coating layer 731 may be further included between the positive electrode 720 and the separator 740 in FIG. 7.

Furthermore, although the above figures illustrate two layers, it goes without saying that it is not limited as long as the negative electrode and one or more coating layer face each other, and a configuration in which three or more layers are formed can also be included.

### <Lithium Secondary Battery>

Next, the lithium secondary battery according to the present disclosure will be described.

The lithium secondary battery of the present disclosure may include the electrode assembly electrolyte and a battery case.

The electrolyte may be a non-aqueous lithium electrolyte comprising a non-aqueous organic solvent and a lithium salt, or may be a flame retardant electrolyte including a flame retardant solvent that has no measured the flash point (substantially non-flammable) or have a flash point of 100°C or more and a lithium.

As the non-aqueous organic solvent of the non-aqueous lithium electrolyte, for example, an aprotic organic solvent, such as N-methyl-2-pyrrolidinone, propylene carbonate, ethylene carbonate, butylene carbonate, dimethyl carbonate, diethyl carbonate, ethylmethyl carbonate, gamma-butylolactone, 1,2-dimethoxy ethane, 1,2-diethoxy ethane, tetrahydrofuran, 2-methyl tetrahydrofuran, dimethyl sulfoxide, 1,3-dioxolane, 4-methyl-1,3-dioxene, diethyl ether, formamide, dimethylformamide, dioxolane, acetonitrile, nitromethane, methyl formate, methyl acetate, phosphoric acid triester, trimethoxy methane, dioxolane derivative, sulfolane, methyl sulfolane, 1,3-dimethyl-2-imidazolidinone, propylene carbonate derivative, tetrahydrofuran derivative, ether, methyl pyropionate, ethyl propionate, and the like can be used.

However, in the case of non-aqueous lithium electrolyte containing such a non-aqueous organic solvent, it is a flammable solvent that volatilizes easily and catches fire easily, which may cause battery safety issues. Thus, the electrolyte may particularly be a flame-retardant electrolyte.

The flame retardant electrolyte may be an electrolyte that does not volatilize easily and does not catch fire. As a result, when the flame retardant electrolyte is applied to a lithium secondary battery, high-temperature safety of the battery can be ensured.

Meanwhile, the flame retardant electrolyte has a problem of lowering an impregnability of a separator for a lithium secondary battery (e.g., a polyolefin-based separator), however, the impregnability of the flame retardant electrolyte is increased by the coating layer according to the present disclosure, and therefore, it is possible to use the flame retardant electrolyte.

Here, the flame retardant solvent having a flash point of 100°C or more or having no flash point can serve as a medium through which ions involved in the electrochemical reaction of the battery can move. For example, the flame retardant solvent may include one or more compound selected from a sulfone-based compound, a nitrile-based compound, a phosphoric acid-based compound, and a fluorine-substituted carbonate-based compound.

The sulfone-based compound may be a cyclic sulfone-based compound or a linear sulfone-based compound, and specifically, may include one or more compound selected from the group consisting of sulfolane, tetramethylene sulfone, dibutyl sulfone, ethylvinyl sulfone, methylpropyl sulfone, ethyl-i-propyl sulfone, ethyl-i-butyl sulfone, i-propyl-i-butyl sulfone, i-propyl-s-butyl sulfone, and butyl-i-butyl sulfone.

The nitrile-based compound may include one or more compound selected from the group consisting of acetonitrile, succinonitrile, adiponitrile, malononitrile, glutaronitrile, suberonitrile and sebaconitrile.

The phosphoric acid-based compound may include one or more compound selected from the group consisting of dimethyl methylphosphate, trimethyl phosphate, triethyl phosphate, tributyl phosphate, diethyl ethyl phosphate, dimethyl methyl phosphate, dimethyl(2-methoxyethoxy)methylphosphonate, diethyl(2-methoxyethoxy)methylphosphonate, and triphenyl phosphate.

The fluorine-substituted carbonate-based compound may include one or more compound selected from the group consisting of bis(2,2,3,3-tetrafluoro-propyl)carbonate, methyl-2,2,2-trifluoroethyl carbonate, ethyl-2,2,2-trifluoroethyl carbonate, propyl-2,2,2-trifluoroethyl carbonate, methyl-2,2,2,2',2',2'-hexafluoro-i-propyl carbonate, ethyl-2,2,2,2',2',2'-hexafluoro-i-propyl carbonate, di-2,2,2-trifluoroethyl carbonate, 2,2,2-trifluoroethyl-N,N-dimethyl carbonate, hexafluoro-i-propyl-N,N-dimethyl carbonate, 4-(2,2,3,3-tetrafluoropropoxymethyl)-[1,3]-dioxolan-2-one, and bis(2,2,3,3-pentafluoro-propyl)carbonate.

The lithium salt is used as a medium for transferring ions in a lithium secondary battery. The lithium salt may include, for example, Li⁺ as a cation, and may comprise one or more selected from the group consisting of F⁻, Cl⁻, Br⁻, I⁻, NO3⁻, N(CN)2⁻, BF₄⁻, ClO₄⁻, B₁₀C1₁₀⁻, AlCl₄⁻, AlO₂⁻, PF₆⁻, CF₃SO₃⁻, CH₃CO₂⁻, CF₃CO₂⁻, AsF₆⁻, SbF₆⁻, CH₃SO₃⁻, (CF₃CF₂SO₂)₂N⁻, (CF₃SO₂)₂N⁻, (FSO₂)₂N⁻, BF₂C₂O₄⁻, BC₄O₈⁻, PF₄C₂O₄⁻, PF₂C₄O₈⁻, (CF₃)₂PF₄⁻, (CF₃)₃PF₃⁻, (CF₃)₄PF₂⁻, (CF₃)₅PF⁻, (CF₃)₆P⁻, C₄F₉SO₃⁻, CF₃CF₂SO₃⁻, CF₃CF₂(CF₃)₂CO⁻, (CF₃SO₂)₂CH⁻, CF₃(CF₂)₇SO₃⁻ and SCN⁻ as an anion.

Specifically, the lithium salt may include a single substance or a mixture of two or more selected from the group consisting of LiCl, LiBr, LiI, LiBF₄, LiClO₄, LiB₁₀Cl₁₀, LiAlCl₄, LiAlO₂, LiPF₆, LiCF₃SO₃, LiCH₃CO₂, LiCF₃CO₂, LiAsF₆, LiSbF₆, LiCH₃SO₃, LiFSI (Lithium bis(fluorosulfonyl) imide, LiN(SO₂F)₂), LiBETI(lithium bis(perfluoroethanesulfonyl) imide, LiN(SO₂CF₂CF₃)₂ and LiTFSI (lithium bis(trifluoromethanesulfonyl) imide, LiN(SO₂CF₃)₂), however, it is preferable to include LiN(SO₂CF₃)₂ from the viewpoint of excellent stability.

In addition to these, the lithium salt commonly used in an electrolyte of a lithium secondary battery can be used without particular limitation

The concentration of the lithium salt can be appropriately changed within a generally usable range, but the lithium salt may be included in the electrolyte at a concentration of 1 M to 3 M, specifically at a concentration of 1 M to 2.5 M, and more specifically at a concentration of 1 M to 2 M in the electrolyte in order to obtain an optimal effect of forming a film for preventing corrosion on the electrode surface. When the concentration of the lithium salt satisfies the above range, the effect of improving the cycle characteristics of the lithium secondary battery during high-temperature storage is sufficient, the viscosity of the flame retardant electrolyte is appropriate, so that the impregnation properties of the flame retardant electrolyte can be improved.

Further, in order to improve charge/discharge characteristics, flame retardancy, and the like, in the electrolyte, pyridine, for example, triethyl phosphite, triethanolamine, cyclic ether, ethylene diamine, n-glyme, hexaphosphate triamide, a nitrobenzene derivatives, sulfur, a quinone imine dye, N-substituted oxazolidinone, N,N-substituted imidazolidine, ethylene glycol dialkyl ether, ammonium salt, pyrrole, 2-methoxyethanol, aluminum trichloride, and the like may also be added. In some cases, halogen-containing solvents such as carbon tetrachloride and ethylene trifluoride may be further included in order to impart incombustibility, carbon dioxide gas may be further included in order to improve high-temperature preservation characteristics, and FEC (Fluoro-Ethylene Carbonate), PRS (Propene sultone), and the like may be further included.

The lithium secondary battery of the present disclosure can be manufactured by incorporating the electrode assembly together with the electrolyte in a battery case.

The battery case may be one commonly used in the field, and the external shape depending on the purpose of the battery is not limited, and for example, may be a cylindrical shape, a prismatic shape, a pouch shape, or a coin shape, but is not limited thereto.

The lithium secondary battery according to another embodiment of the present disclosure can be used not only as a battery cell used as a power source for a small-sized device, but also preferably as a unit battery for a medium- or large-sized battery module including a plurality of battery cells. Preferable examples of the medium-sized or large-sized device include an electric vehicle, a hybrid electric vehicle, a plug-in hybrid electric vehicle, and an energy storage system (ESS).

Hereinafter, the present disclosure will be described in more detail with reference to specific examples. However, the following examples are only exemplary embodiments for facilitating understanding of the invention, and are not intended to limit the scope of the invention. It would be obvious to those of ordinary skill in the art that various changes and modifications can be made to the invention without departing from the scope and spirit of the present disclosure, and it goes without saying that these changes and modifications fall within the scope of the appended claims.

In the following, the D₅₀ of the particles was measured from the value of the particle size at the point which the cumulative volume reaches 50% by using a laser diffraction method, and the zeta potential value was measured by an electrophoretic light scattering method using a dynamic light scattering device.

### <Example 1>

### Preparation of Composition for Forming First Coating Layer

BN (D50: 1 micrometer, zeta potential: -38 mV) and polyvinylidene fluoride (PVDF) were put and dispersed at a weight ratio of 90: 10 in N-methyl-2-pyrrolidone (NMP) solvent to prepare a composition for forming a first coating layer.

### Preparation of Composition for Forming Second Coating Layer

Li_{1.3}Al_{0.3}Ti_{1.7}(PO₄)₃ (D50: 0.6 micrometer) and polyvinylidene fluoride (PVDF) were put and dispersed at a weight ratio of 85: 15 in N-methyl-2-pyrrolidone (NMP) solvent to prepare a composition for forming a second coating layer.

### Manufacture of Negative Electrode

Next, a copper (Cu) metal thin film with a thickness of 20 micrometers was prepared as a negative electrode current collector, and graphite as a negative electrode active material, carbon black as a conductive material, carboxymethylcellulose(CMC) as a thickener and PVDF as a binder were put and dispersed at a weight ratio of 95 : 1 : 1.5 : 2.5 in water, and the prepared negative electrode slurry was coated, dried and rolled on one side of the copper metal thin film to a thickness of 75 micrometers, thereby manufacturing a negative electrode.

### Manufacture of Positive Electrode

An aluminum(Al) metal thin film with a thickness of 15 micrometers was prepared as a positive electrode current collector, and Li(Ni_{0.8}Mn_{0.1}Co_{0.1})O₂ as the positive electrode active material, carbon nanotube as the conductive material, and PVDF as the binder were put and dispersed at a weight ratio of 96 : 1 : 3 in NMP solvent, and the prepared positive electrode slurry was coated, dried and rolled on one side of the aluminum metal thin film to a thickness of 60 micrometers, thereby manufacturing a positive electrode.

### Manufacture of Electrode Assembly

The composition for forming a first coating layer was coated on the negative electrode active material layer of the negative electrode to a thickness of 10 micrometers, and dried to form a first coating layer, and the composition for forming a second coating layer was coated on the first coating layer to a thickness of 10 micrometers, and dried to form a second coating layer.

Subsequently, a separator made of polyolefin (thickness: 15 micrometers) was inserted between the second coating layer and the positive electrode active material layer of the positive electrode, and arranged as shown in FIG. 5 so that the separator and the positive active material layer were in contact with each other, thereby manufacturing an electrode assembly.

### Manufacture of Lithium Secondary Battery

The electrode assembly was impregnated with an electrolyte in which LiN(SO₂CF₃)₂(LiFSI) was dissolved to 1.5M in the flame retardant solvent sulfolane (flash point: about 160~170 degrees), and incorporated in a battery case to manufacture a lithium secondary battery.

### <Example 2>

In Example 1, the composition for forming a first coating layer was coated on one side of a separator made of polyolefin (thickness: 15 micrometers) to form a first coating layer, and the composition for forming a second coating layer was coated on the other side of the separator to form a second coating layer, thereby manufacturing a separator assembly. A lithium secondary battery was manufactured in the same manner as in Example 1, except that an electrode assembly was manufactured by arranging between a positive electrode and a negative electrode in the separator assembly so that a first coating layer comes into an opposing contact with the negative electrode as shown in FIG. 6.

### <Example 3>

A positive electrode and a negative electrode were manufactured in the same manner as in Example 1.

### Manufacture of Electrode Assembly

The composition for forming a second coating layer was coated on the negative electrode active material layer of the negative electrode to a thickness of 10 micrometers, and dried to form a second coating layer, and the composition for forming a first coating layer was coated on both sides of the polyolefin separator (thickness: 15 micrometers) to a thickness of 5 micrometers, respectively, and dried to form a first coating layer, thereby manufacturing a separator assembly.

Subsequently, the negative electrode, the separator assembly, and the positive electrode were stacked to manufacture an electrode assembly.

### Manufacture of Lithium Secondary Battery

The electrode assembly was impregnated with an electrolyte in which LiN(SO₂CF₃)₂(LiFSI) was dissolved to 1.5M in the flame retardant solvent sulfolane (flash point: about 160~170 degrees), and incorporated in a battery case to manufacture a lithium secondary battery.

### <Example 4>

A positive electrode and a negative electrode were manufactured in the same manner as in Example 1.

### Manufacture of Electrode Assembly

The composition for forming a first coating layer was coated on one side of the negative electrode active material layer of the negative electrode to a thickness of 10 micrometers, and dried to form a first coating layer, and the composition for forming a second coating layer was coated on one side of the positive active material layer of the positive electrode to a thickness of 10 micrometers, and dried to form a second coating layer. Then, the first coating layer and the second coating layer were arranged so as to face each other, thereby manufacturing an electrode assembly.

### Manufacture of Lithium Secondary Battery

The electrode assembly was impregnated with an electrolyte in which LiN(SO₂CF₃)₂(LiFSI) was dissolved to 1.5M in the flame retardant solvent sulfolane (flash point: about 160~170 degrees), and incorporated in a battery case to manufacture a lithium secondary battery.

### <Comparative Example 1>

A positive electrode and a negative electrode were manufactured in the same manner as in Example 1.

### Manufacture of Electrode Assembly

The positive electrode active material layer of the positive electrode and the negative electrode active material layer of the negative electrode were set to face each other, and a separator made of polyolefin (thickness: 15 micrometers) was arranged between them. The electrode assembly was manufactured as in the electrode assembly of a general lithium secondary battery.

### Manufacture of Lithium Secondary Battery

The electrode assembly was impregnated with an electrolyte in which LiN(SO₂CF₃)₂(LiFSI) was dissolved to 1.5M in the flame retardant solvent sulfolane, and incorporated in a battery case to manufacture a lithium secondary battery.

### <Comparative Example 2>

A positive electrode and a negative electrode were manufactured in the same manner as in Example 1.

### Manufacture of Electrode Assembly

The composition for forming a second coating layer of Example 1 was coated on the negative electrode active material layer of the negative electrode to a thickness of 20 micrometers, and dried to form a coating layer.

Subsequently, a separator made of polyolefin (thickness: 15 micrometers) was inserted between the coating layer and the positive active material layer of the positive electrode, and arranged such that the separator and the positive electrode active material layer were in contact with each other to manufacture an electrode assembly.

### Manufacture of Lithium Secondary Battery

The electrode assembly was impregnated with an electrolyte in which LiN(SO₂CF₃)₂(LiFSI) was dissolved to 1.5M in the flame retardant solvent sulfolane, and incorporated in a battery case to manufacture a lithium secondary battery.

### <Comparative Example 3>

A positive electrode and a negative electrode were manufactured in the same manner as in Example 1.

### Manufacture of Electrode Assembly

A composition for forming a second coating layer was prepared in the same manner as in Example 1, except that in Example 1, polymethyl methacrylate (PMMA) polymer particles (D50: 1 micrometer, zeta potential: -50mV) were used instead of Li_{1.3}Al_{0.3}Ti_{1.7}(PO₄)₃ (D50: 0.6 micrometer) in the composition for forming a second coating layer. The composition for forming a second coating layer was coated on the negative electrode active material layer of the negative electrode to a thickness of 20 micrometers, and dried to form a coating layer.

Subsequently, a separator made of polyolefin (thickness: 15 micrometers) was inserted between the coating and the positive active material layer of the positive electrode, and arranged so that the separator and the positive electrode active material layer were in contact with each other, thereby manufacturing an electrode assembly.

### Manufacture of Lithium Secondary Battery

The electrode assembly was impregnated with an electrolyte in which LiN(SO₂CF₃)₂(LiFSI) was dissolved to 1.5M in the flame retardant solvent sulfolane, and incorporated in a battery case to manufacture a lithium secondary battery.

### <Comparative Example 4>

A positive electrode and a negative electrode were manufactured in the same manner as in Example 1.

### Manufacture of Electrode Assembly

In Example 1, the composition for forming a second coating layer was coated on the negative electrode active material layer of the negative electrode to a thickness of 10 micrometers, and dried to form a second coating layer, and the composition for forming a second coating layer was coated on the positive active material layer of the positive electrode to a thickness of 10 micrometers, and dried to form a second coating layer.

Subsequently, a separator made of polyolefin (thickness: 15 micrometers) was arranged so as to insert between the second coating layers as shown in FIG. 4, thereby manufacturing an electrode assembly.

### Manufacture of Lithium Secondary Battery

The electrode assembly was impregnated with an electrolyte in which LiN(SO₂CF₃)₂(LiFSI) was dissolved to 1.5M in the flame-retardant solvent sulfolane, and incorporated in a battery case to manufacture a lithium secondary battery.

### <Comparative Example 5>

A positive electrode and a negative electrode were manufactured in the same manner as in Example 1.

### Manufacture of Electrode Assembly

In Example 1, polymethyl methacrylate (PMMA) polymer particles (D50: 1 micrometer, zeta potential: -50mV) were used instead of Li_{1.3}Al_{0.3}Ti_{1.7}(PO₄)₃ (D50: 0.6 micrometer) in the composition for forming a second coating layer.

Then, in Example 1, the composition for forming a second coating layer was coated on the negative electrode active material layer of the negative electrode to a thickness of 10 micrometers, and dried to form a second coating layer, and the composition for forming a first coating layer was coated on the positive active material layer of the positive electrode to a thickness of 10 micrometers, and dried to form a first coating layer.

Subsequently, a separator made of polyolefin (thickness: 15 micrometers) was arranged so as to insert between the first coating layer and the second coating layer as shown in FIG. 4 to manufacture an electrode assembly.

### Manufacture of Lithium Secondary Battery

The electrode assembly was impregnated with an electrolyte in which LiN(SO₂CF₃)₂(LiFSI) was dissolved to 1.5M in the flame retardant solvent sulfolane, and incorporated in a battery case to manufacture a lithium secondary battery.

### <Experimental Example 1>

The initial capacity and discharge capacity were measured for the lithium secondary batteries of Examples 1 to 4 and Comparative Examples 1 to 5, and the results were shown in Table 1 below.

The initial efficiency was calculated as the ratio of discharge capacity to charge capacity.

**[Table 1]**

| | Initial efficiency (%) | Discharge capacity (mAh) |
|---|---|---|
| Example 1 | 88.1 | 980.7 |
| Example 2 | 89.1 | 980.7 |
| Example 3 | 82.0 | 902.6 |
| Example 4 | 88.1 | 980.7 |
| Comparative Example 1 | 90.20% | 980.7 |
| Comparative Example 2 | 81.80% | 889.5 |
| Comparative Example 3 | 76.60% | 833.6 |
| Comparative Example 4 | 82.2 | 915.8 |
| Comparative Example 5 | 77.0 | 851.0 |

Referring to Table 1, it was confirmed that the performance of the lithium secondary battery according to the present disclosure is superior to Comparative Examples 2 to 5, and exhibits performance at a level similar to that of Comparative Example 1 which is a lithium secondary battery that does not include an electrolyte layer. From this, when using a flame retardant solvent, not only the low ionic conductivity and high interfacial resistance between electrolyte particles, but also side reactions of the materials used in the electrolyte layer in contact with the positive electrode and the negative electrode may be problematic, and therefore, when an electrolyte layer containing a less reactive material and a material with good electrolyte impregnation properties are formed as separate layers as in the present disclosure, more excellent effects are exhibited.

Meanwhile, referring to Examples 1 to 4 and Comparative Example 4, it can be seen that it is effectively most preferable when the negative electrode side does not contain oxide-based solid electrolyte particles, but the positive electrode side contains oxide-based solid electrolyte particles.

It will be apparent to those skilled in the art that various modifications and variations can be made in the present disclosure without departing from the spirit and scope of the present disclosure.

### [Industrial Applicability]

The electrode assembly according to the present disclosure has a coating layer formed in two or more layers in the stacking direction between the positive electrode and the negative electrode, and the coating layer contains a specific composition depending on the components that come into an adverse contact with each other, whereby the insulation between the positive electrode and the negative electrode is effectively maintained by a coating layer that provides impregnability to the electrolyte but does not easily shrink even in a high-temperature environment, which exhibits the effect of improving high-temperature safety.

In addition, since the coating layer according to the present disclosure itself has electrical insulation properties, not only it function as a separator without a separator, but when a separator is used together, it prevents shrinkage of the separator, further increases electrical insulation properties, has heat resistance, and is more effective in high temperature safety.

Moreover, in regard to the deterioration issues of cell performance resulting from low ionic conductivity and high interface resistance between electrolyte particles that may appear when a flame-retardant electrolyte is subsequently used together, the electrode assembly according to the present disclosure includes two or more coating layers so that the coating layers having more suitable composition depending on the type of opposing electrodes, thereby capable of minimizing side reactions with electrode active materials, which exhibits the effect of improving the performance of the lithium secondary battery.

Furthermore, when a flame-retardant electrolyte is used together as the electrolyte, not only it can further improve the safety by suppressing ignition, but also the problem of deterioration of electrolyte impregnation properties that may appear by flame-retardant electrolytes can be solved by incorporating particles having a surface charge into the coating layer.

## Claims

1. An electrode assembly comprising:
a positive electrode, a negative electrode, and a coating layer located between the positive electrode and the negative electrode,
wherein the coating layer is formed in two or more layers in the stacking direction of the positive electrode and the negative electrode,
wherein the coating layer includes a first coating layer that comes into an opposing contact with the negative electrode and a second coating layer that does not come into an opposing contact with the negative electrode, the first coating layer includes any one particle selected from i) to iii) below, the second coating layer includes iii) when i) or ii) is included in the first coating layer, and includes either i) or ii) when iii) is included in the first coating layer:
i) oxide-based solid electrolyte particles and ceramic particles having an absolute value of zeta potential of 25 mV or more,
ii) oxide-based solid electrolyte particles, and
iii) ceramic particles with an absolute value of zeta potential of 25 mV or more.

2. The electrode assembly according to claim 1, wherein:
the oxide-based solid electrolyte particles include one or more lithium metal oxide or lithium metal phosphate selected from Nasicon-type solid electrolyte, Lisicon-type solid electrolyte, Garnet-type solid electrolyte, Perovskite-type solid electrolyte, and LiPON-type solid electrolyte.

3. The electrode assembly according to claim 1, wherein:
the oxide-based solid electrolyte particles include one or more selected from the group consisting of LAGP(lithium aluminum germanium phosphate)-based compound, LLZO(lithium lanthanum zirconium oxide)-based compound, LATP(lithium aluminum titanium phosphate)-based compound, LLZTO(lithium lanthanum zirconium tantalum oxide)-based compound, LLTO(lithium lanthanum titanium oxide)-based compound, LSTP(lithium silicon titanium phosphate)-based compound, and LGPO(lithium germanium phosphate)-based compound.

4. The electrode assembly according to claim 1, wherein:
the ceramic particles include one or more selected from the group consisting of BN(boron nitride), boehmite, Al₂O₃, TiO₂, Fe₂O₃, SiO₂, ZrO₂, Co₃O₄, SnO₂, NiO, ZnO, V₂O₅, LiF and MnO.

5. The electrode assembly according to claim 4, wherein:
the ceramic particles include one or more selected from the group consisting of BN(boron nitride), boehmite, Al₂O₃, and LiF.

6. The electrode assembly according to claim 1, wherein:
the second coating layer comes into an opposing contact with the positive electrode.

7. The electrode assembly according to claim 1, wherein:
the first coating layer includes iii), and the second coating layer includes either i) or ii).

8. The electrode assembly according to claim 1, wherein:
one or more of the first coating layer and the second coating layer further comprises polymer particles having an absolute value of zeta potential of 25 mV or more.

9. The electrode assembly according to claim 8, wherein:
the polymer particles include one or more selected from the group consisting of polyethylene oxide (PEO), polyphenylene sulfide (PPS), polymethyl(meth)acrylate(PMMA), polystyrene, polyvinyl chloride, polycarbonate, polysulfone, polyethersulfone, polyetherimide, polyphenylsulfone, polyamideimide, polyimide, polybenzimidazole, polyether ketone, polyphthalamide, polybutylene terephthalate, and polyethylene terephthalate.

10. The electrode assembly according to claim 1, wherein:
the electrode assembly further comprises a separator, and the second coating layer comes into an opposing contact with the positive electrode, the separator, or the positive electrode and the separator.

11. The electrode assembly according to claim 10, wherein:
the first coating layer includes iii), and the second coating layer includes either i) or ii).

12. The electrode assembly according to claim 10, wherein:
one or more of the first coating layer and the second coating layer further comprises polymer particles having an absolute value of zeta potential of 25 mV or more.

13. The electrode assembly according to claim 12, wherein:
the polymer particles include one or more selected from the group consisting of polyethylene oxide(PEO), polyphenylene sulfide(PPS), polymethyl(meth)acrylate(PMMA), polystyrene, polyvinyl chloride, polycarbonate, polysulfone, polyethersulfone, polyetherimide, polyphenylsulfone, polyamideimide, polyimide, polybenzimidazole, polyether ketone, polyphthalamide, polybutylene terephthalate, and polyethylene terephthalate.

14. The electrode assembly according to claim 1, wherein:
the coating layer further includes one or more additive selected from the group consisting of a binder and a dispersant, respectively.

15. The electrode assembly according to claim 1, wherein:
the coating layers have a thickness of 1 micrometer to 30 micrometers, respectively.

16. A lithium secondary battery comprising the electrode assembly according to any one of claims 1 to 15, an electrolyte, and a battery case.

17. The lithium secondary battery according to claim 16, wherein:
the electrolyte is a flame retardant electrolyte that includes a flame retardant solvent having a flash point of 100°C or more or having no flash point and a lithium salt.

18. The lithium secondary battery according to claim 17, wherein:
the flame retardant solvent includes one or more compound selected from a sulfone-based compound, a nitrile-based compound, a phosphoric acid-based compound, and a fluorine-substituted carbonate-based compound.

19. The lithium secondary battery according to claim 17, wherein:
the lithium salt includes LiN(SO₂CF₃)₂.
